# EUROPEAN PATENT APPLICATION

(11) **EP 4 596 196 A1**
(43) Date of publication of application: **06.08.2025**
(21) Application number: 24208695.7
(22) Date of filing: 24.10.2024
(51) Int. Cl.: B26D 5/20, B26D 1/15, B26D 7/06, B26D 7/26, G01B 21/00

(54) **FOOD PRODUCT SLICER AND ASSOCIATED GAUGE PLATE SLIDE ASSEMBLY**

(30) Priority: 31.10.2023 US 202363594568 P; 04.10.2024 US 202418906850
(71) Applicant: Illinois Tool Works Inc., Glenview IL 60025 (US)
(72) Inventor: BIRD, Matthew W., Glenview, 60025 (US); JONES, Thomas P., Glenview, 60025 (US); RUTLEDGE, Austin, Glenview, 60025 (US)
(74) Representative: HGF

(57) **Abstract**

A food product slicer includes a base, a knife mounted for rotation relative to the base, a carriage assembly mounted to the base for reciprocal movement back and forth past a cutting edge of the knife, and a gauge plate mounted for movement between a closed position that prevents slicing and multiple open positions that permit slicing at respective thicknesses. A gauge plate adjustment system includes a knob with an associated cam, a follower that is engaged with the cam and moved by rotation of the knob and cam, wherein the follower linked for moving the gauge plate, wherein the follower rides on a slide rail, wherein the slide rail comprises a plate member.

## Description

### TECHNICAL FIELD

This application relates generally to food product slicers of the type commonly used to slice bulk food products and, more specifically, to a gauge plate slide assembly in such a food product slicer.

### BACKGROUND

Typical reciprocating food slicers have a rotatable, circular or disc-like slicing blade, an adjustable gauge plate for determining the thickness of the slice and a carriage for supporting the food as it is moved back and forth past the cutting edge of the knife during slicing. A drive motor may be linked to drive the carriage back and forth during an automatic slicing operation carried out by a controller of the slicer. The gauge plate is situated along the edge of the knife toward the front of a slicing stroke and is laterally movable with respect to the knife for determining the thickness of the slices to be cut. A rotatable adjustment knob or indexing mechanism is provided for setting a spacing between the plane of the gauge plate surface and the plane of the knife edge for the purpose of slicing so that operators can select a thickness of slices to be produced.

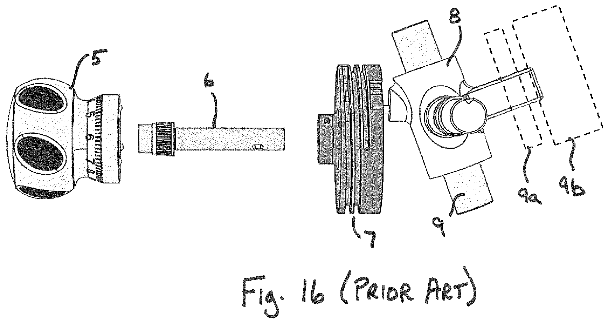

In the past, per Fig. 16, such a knob 5 has been coupled to a separate shaft component 6, which in turn was coupled to a separate cam component 7 that engages with a follower 8, where movement of the follower 8 along a slide rod 9 (e.g., by bearings of the follower) caused movement of the gauge plate. Because the follower 8 could rotate about the slide rod 9, the follower was also engaged with a fixed second rod (e.g., 9a), running parallel to rod 9, to prevent such rotation, or in some cases included a slot that rode along a separate fixed anti-rotation plate 9b to prevent such rotation, in either case to maintain the desired orientation of the gauge plate (e.g., maintain the gauge plate food contacting surface plane parallel to a plane defined by the knife cutting edge). Such configurations are difficult to assemble and require adjustments to operate correctly. In addition, there are many moving parts that add complexity to the assembly process.

Determining gauge plate position is also problematic in existing systems.

Accordingly, it would be desirable to provide a slicer with an index assembly that addresses one or more of the above issues.

### SUMMARY

In one aspect, a food product slicer includes a base, a knife mounted for rotation relative to the base, a carriage assembly mounted to the base for reciprocal movement back and forth past a cutting edge of the knife, and a gauge plate mounted for movement between a closed position that prevents slicing and multiple open positions that permit slicing at respective thicknesses. A gauge plate adjustment system includes a knob with an associated cam, a follower that is engaged with the cam and moved by rotation of the knob and cam, wherein the follower linked for moving the gauge plate, wherein the follower rides on a slide rail, wherein the slide rail comprises a plate member.

In another aspect, a food product slicer includes a base, a knife mounted for rotation relative to the base, a carriage assembly mounted to the base for reciprocal movement back and forth past a cutting edge of the knife, and a gauge plate mounted for movement between a closed position that prevents slicing and multiple open positions that permit slicing at respective thicknesses. A gauge plate adjustment system includes a follower that is linked for moving the gauge plate, wherein the follower rides on a slide rail, wherein the slide rail comprises a plastic member, wherein an engagement of the follower with the slide rail is configured to allow sliding movement of the follower along the slide rail while preventing rotation of the follower about an axis of the slide rail.

In embodiments, the slide rail may include an integrated sensing assembly.

The details of one or more embodiments are set forth in the accompanying drawings and the description below. Other features, objects, and advantages will be apparent from the description and drawings, and from the claims.

### BRIEF DESCRIPTION OF DRAWINGS

Figs. 1 and 2 show a food product slicer;
Figs. 3-7 show views of a slide assembly, or portions thereof, of the slicer;
Figs. 8-9 shows views of an alternative slide assembly;
Figs. 10-15 show an alternative slide assembly with an integrated sensing system;
Fig. 16 shows a multi-component knob and slide assembly of the prior art.

### DETAILED DESCRIPTION

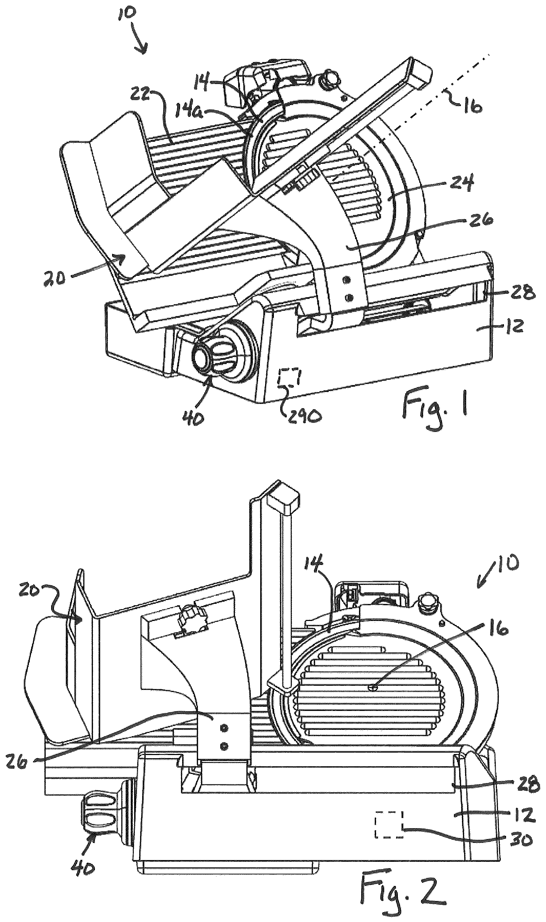

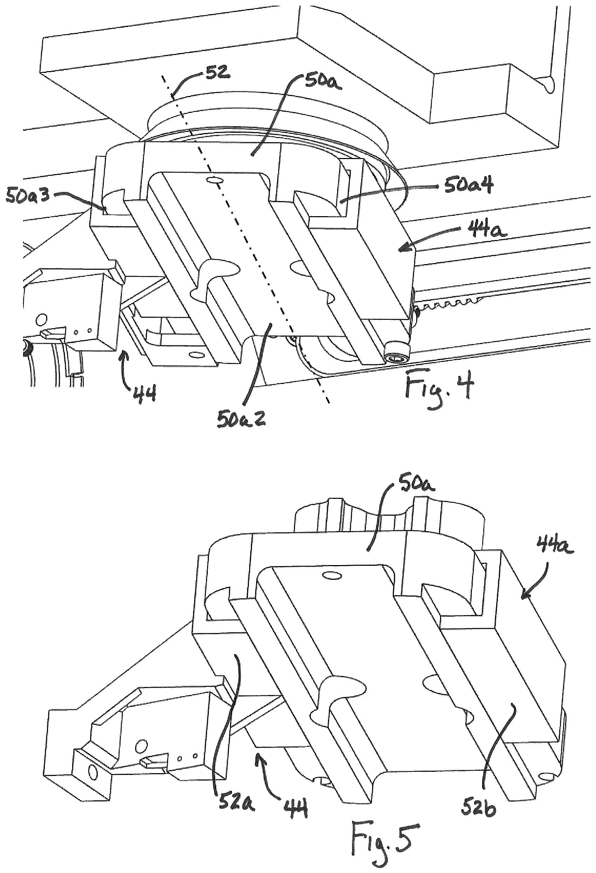

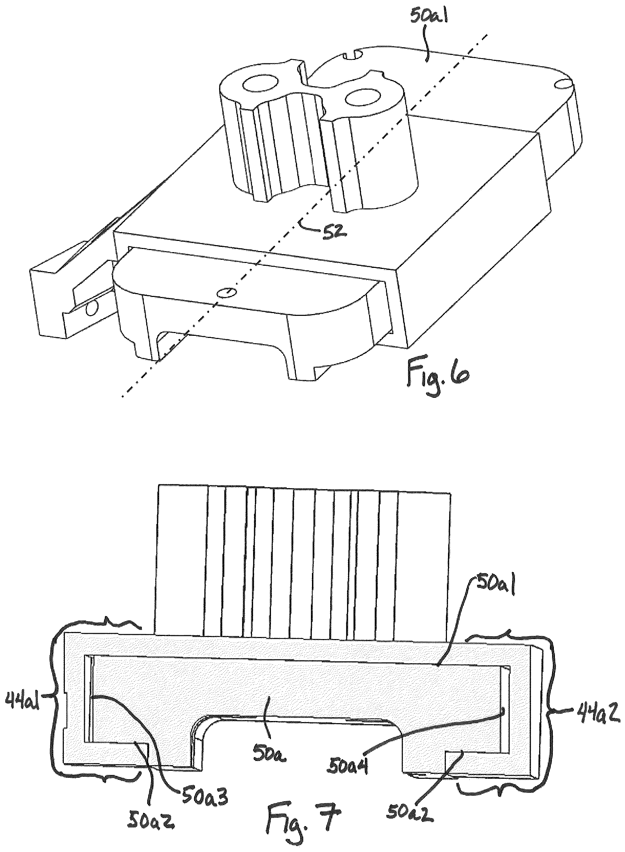

Referring to Figs. 1-7, a food product slicer 10 includes a housing or base 12 and a circular, motor-driven slicing knife 14 that is mounted to the housing for rotation about an axis 16. Fig. 2 depicts a right-side view of the slicer. The left side of Fig. 2, where the controls are located, is generally referred to as the front side of the slicer (which is where an operator stands for slicing), the right side of Fig. 2 is generally referred to as the rear side of the slicer. A food product can be supported on a manually operable (or motor driven) food carriage 20 which moves the food product to be sliced past the cutting edge 14a of the rotating slicing knife 14. The food carriage 20 reciprocates from left to right relative to Fig. 2, along a linear path so that the lower end of the bulk food product slides along the surface of a gauge plate 22, is cut by the knife 14 and then slides along a knife cover plate 24. Food carriage 20 includes a tray mounted on a tray arm 26 that orients the food carriage tray at the appropriate angle (typically perpendicular) to the knife cutting-edge plane. The food carriage arm reciprocates in a slot 28 at a lower portion of the housing 12. The carriage 20 can be moved manually (e.g., by a handle) and/or the carriage 20 may also be automatically driven (e.g., as by an internal motor 30 that drives a belt that is linked internally to the arm 26).

A gauge plate system includes a rotatable knob 40 (connected to an opening in the base 12) that includes a grip part 40a and a cam part 40b. The cam part 40b includes an axially facing spiral cam slot 40b1 that receives a follower pin 42 of a follower 44 that is part of an assembly 46 that is linked to move the gauge plate.

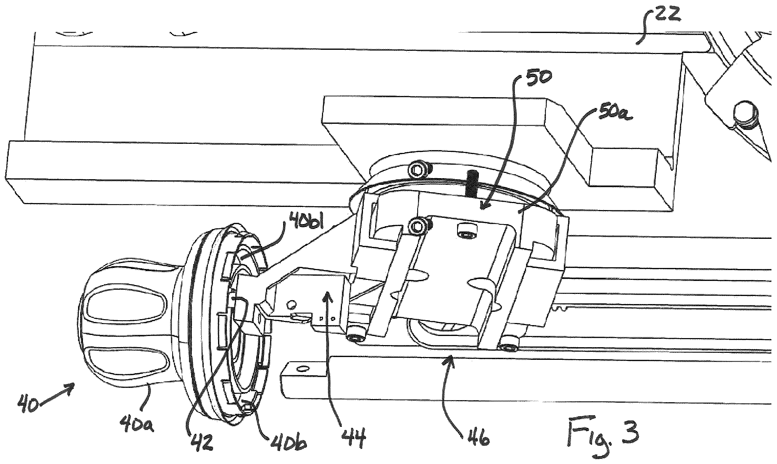

Here, the follower 44 is moved by rotation of the knob and cam, and the follower is linked (through an upper opening in the base) for moving the gauge plate. Per Figs. 3-7, the follower 44 rides on a slide rail 50, wherein the slide rail comprises a plate member 50a. The slide rail 50 is mounted in a fixed position within the base. An engagement of the follower 44 with the slide rail 50 is configured to allow sliding movement of the follower along an axis 52 of the slide rail while preventing rotation of the follower about the axis of the slide rail. Thus, a separate structure to prevent rotation of the follower is not required.

The illustrated plate member 50a includes a major surface 50a1 (upward facing), a major surface 50a2 (downward facing), a minor edge 50a3 running between the major surfaces, and a opposite minor edge 50a4 running between the major surfaces. The follower 44 includes an attachment part 44a that is configured with a portion or portions 44a1, 44a2 that wrap from the major surface 50a1, around one of the minor edges 50a3, 50a4 and over at least part of the major surface 50a2. This configuration stabilizes the engagement of the follower with the slide rail. Generally, the plate member 50a includes an outer surface profile, in axial end view, and the follower attachment part 44a includes an internal surface profile, in axial end view, wherein at least part of the internal surface profile matches at least part of the external surface profile in a manner that facilitates sliding between the profiles while preventing relative rotation between the attachment part 44a and plate member 50a.

In one implementation, the attachment part 44a is a monolithic structure. In another implementation, the attachment part 44a could be multiple interconnected parts (e.g., the segments 52a, 52b could be separate plate structures that are connected by any of fasteners, adhesive, welding etc.).

In embodiments, the plate member 50a comprises a plastic material. For example, the plastic could be acetal or nylon. In another example, the plastic material may be an ultra high molecular weight plastic, in which case a need for inclusion of grease to facilitate sliding between the follower attachment part 44a and the plate member 50a may be eliminated. However, use of plastic is not necessarily required.

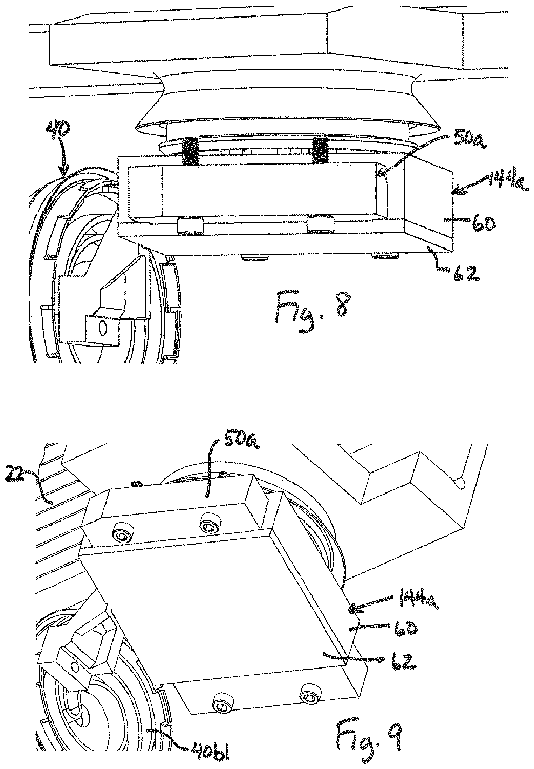

Figs. 8 and 9 show an alternative embodiment in which the follower attachment part 144a includes an upper segment 60 that is U-shaped in axial end profile and a capture plate 62 that connects to the upper segment 60 (e.g., via fasteners, adhesive, welding etc.) to hold the attachment part 144a on the plate member 50a to allow sliding and prevent rotation. As in the above embodiment, here, the plate member 50a includes an outer surface profile, in axial end view, and the follower attachment part 144a includes an internal surface profile, in axial end view, wherein at least part of the internal surface profile matches at least part of the external surface profile in a manner that facilitates sliding between the profiles while preventing relative rotation between the attachment part 144a and plate member 50a.

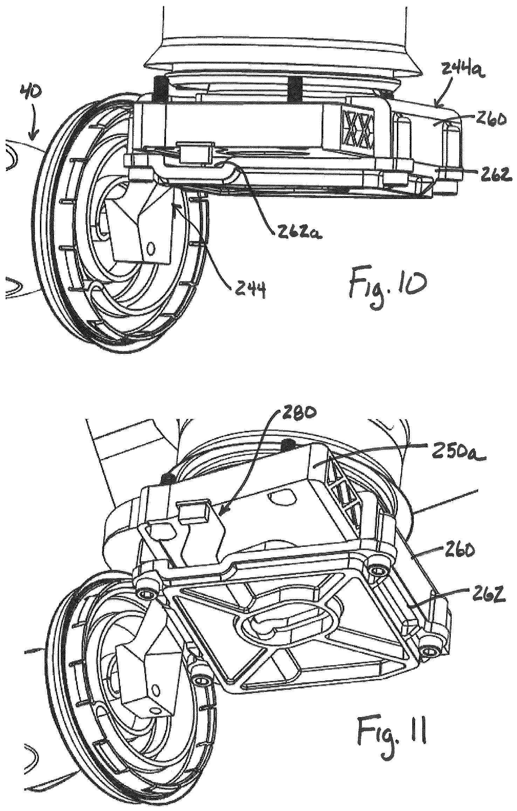

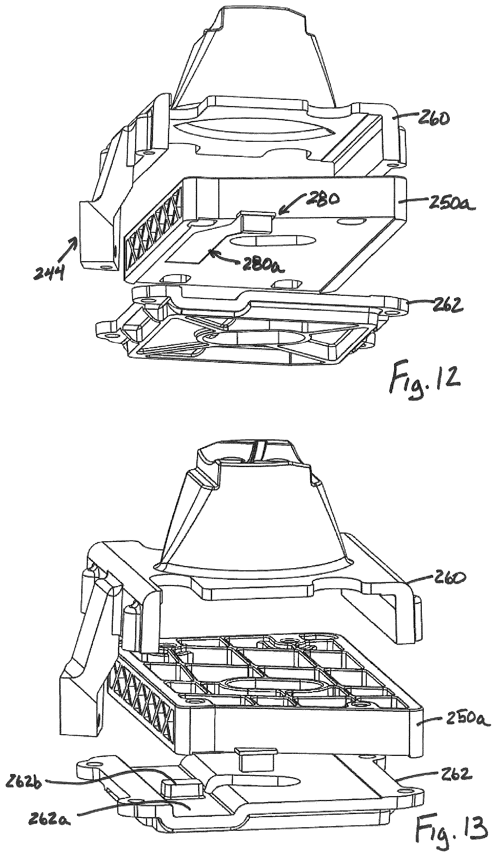

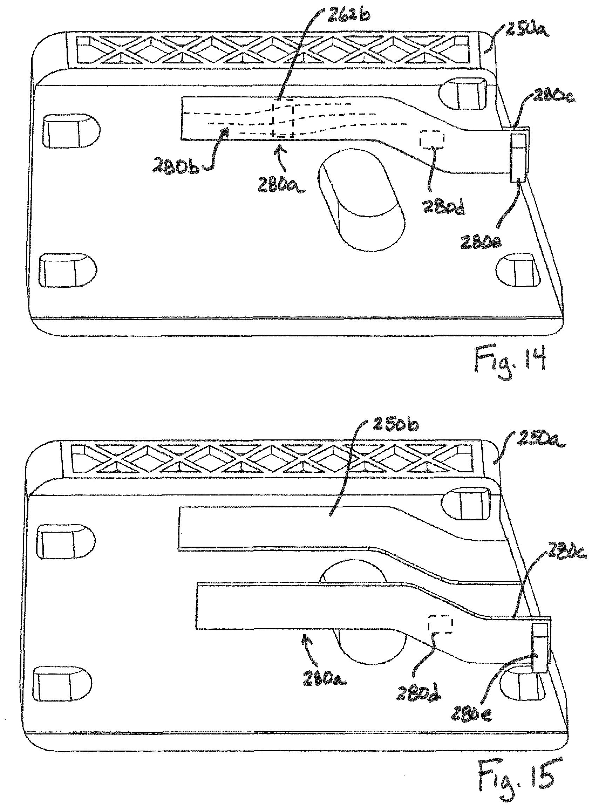

Figs. 10-15 show another alternative embodiment in which the follower 244 has an attachment part 244a that includes an upper segment 260 with U-shaped profile and a lower capture plate 262. The lower capture plate 262 includes an upwardly facing recessed region 262a and the slide rail plate member 250a includes a downwardly facing sensing assembly 280 integrated thereon for sensing movement and/or position of the follower 244. An upward projection 262b is located along the recessed region 262a and aligns with a sensing section 280a of the sensing assembly 280.

Here, the sensing assembly 280 comprises an inductive sensing assembly with a lay flat electromagnetic field generator 280b along the sensing section. The generator may be formed by multiple sinusoidal shaped conductors distributed along the length of the sensing section 280a. Here, the plate member 250a includes a recess 250b into which the lay flat electromagnetic field generator 280b is seated (e.g., by an adhesive, one or more fasteners or a snap-in connection). Here, the inductive sensing assembly is formed on a printed circuit board 280c, wherein the lay flat electromagnetic field generator 280b is formed by multiple conductors located along the sensing section 280a of the printed circuit board. The printed circuit board 280c also includes one or more integrated detection components 280d (e.g., a voltage detector component) and an electrical connector 280e for connecting the sensing assembly to a machine controller 290 (e.g., shown in Fig. 1).

In operation, the projection 262b projects toward the lay flat electromagnetic field generator 280b, and the projection is of an electromagnetic material that disrupts different portions of the electromagnetic field produced by the lay flat electromagnetic field generator based upon different relative positioning of the projection 280b along the length of lay flat magnetic field generator. This results in different voltage characteristics changes that can be utilized to identify position of the follower 244 along the plate member 250a, which corresponds to a position of the gauge plate relative the plate member. In embodiments, this sensing assembly can be utilized in a slice thickness sensing system as described in U.S. Patent Publication No. 2024/0308098 A1, the entirety of which is incorporated herein by reference.

It is to be clearly understood that the above description is intended by way of illustration and example only and is not intended to be taken by way of limitation. Variations are possible.
Certain embodiments of the invention are described in the following clauses:
Clause 1. A food product slicer, comprising:
   a base;
   a knife mounted for rotation relative to the base;
   a carriage assembly mounted to the base for reciprocal movement back and forth past a cutting edge of the knife;
   a gauge plate mounted for movement between a closed position that prevents slicing and multiple open positions that permit slicing at respective thicknesses;
   a gauge plate adjustment system including a knob with an associated cam, a follower that is engaged with the cam and moved by rotation of the knob and cam, wherein the follower is linked for moving the gauge plate, wherein the follower rides on a slide rail, wherein the slide rail comprises a plate member.
Clause 2. The food product slicer of clause 1, wherein an engagement of the follower with the slide rail is configured to allow sliding movement of the follower along the slide rail while preventing rotation of the follower about an axis of the slide rail.
Clause 3. The food product slicer of clause 1, wherein the plate member includes a first major surface, a second major surface, a first minor edge running between the first major surface and the second major surface and axially along the plate member, a second minor edge running between the first major surface and the second major surface and axially along the plate member, wherein the follower is configured with a portion that wraps from the first major surface, around the first minor edge and over the second major surface.
Clause 4. The food product slicer of clause 3, wherein the follower is configured with a portion that wraps from the first major surface, around the second minor edge and over the second major surface.
Clause 5. The food product slicer of clause 1, wherein the plate member comprises a plastic material.
Clause 6. The food product slicer of clause 5, wherein the plastic material is an ultra high molecular weight plastic.
Clause 7. The food product slicer of clause 1, wherein the plate member includes an outer surface profile, in axial end view, and the follower includes an attachment part that includes an internal surface profile, in axial end view, wherein at least part of the internal surface profile matches at least part of the external surface profile.
Clause 8. The product slicer of clause 1, wherein the plate member includes a sensing assembly position thereon for sensing movement and/or position of the follower.
Clause 9. The food product slicer of clause 8, wherein the sensing assembly comprises an inductive sensing assembly with a lay flat electromagnetic field generator.
Clause 10. The food product slicer of clause 9, wherein the plate member includes a recess into which the lay flat electromagnetic field generator is seated.
Clause 11. The food product slicer of clause 10, wherein the inductive sensing assembly further comprises a printed circuit board, wherein the lay flat electromagnetic field generator comprises multiple conductors located on a sensing section of the printed circuit board, wherein the printed circuit board also includes one or more integrated detection components and an electrical connector.
Clause 12. The food product slicer of clause 9, wherein the follower includes a projection that projects toward the lay flat electromagnetic field generator, wherein the projection is of an electromagnetic material that disrupts different portions of the electromagnetic field produced by the lay flat electromagnetic field generator based upon different relative positioning of the projection along the lay flat magnetic field generator.
Clause 13. A food product slicer, comprising:
   a base;
   a knife mounted for rotation relative to the base;
   a carriage assembly mounted to the base for reciprocal movement back and forth past a cutting edge of the knife;
   a gauge plate mounted for movement between a closed position that prevents slicing and multiple open positions that permit slicing at respective thicknesses;
   a gauge plate adjustment system including a follower that is linked for moving the gauge plate, wherein the follower rides on a slide rail, wherein the slide rail comprises a plastic member, wherein an engagement of the follower with the slide rail is configured to allow sliding movement of the follower along the slide rail while preventing rotation of the follower about an axis of the slide rail.
Clause 14. The product slicer of clause 13, wherein the slide rail includes a sensing assembly position thereon for sensing movement and/or position of the follower.
Clause 15. The food product slicer of clause 14, wherein the sensing assembly comprises an inductive sensing assembly with a lay flat electromagnetic field generator.
Clause 16. The food product slicer of clause 15, wherein the slide rail includes a recess into which the lay flat electromagnetic field generator is seated.

## Claims

1. A food product slicer, comprising:
a base;
a knife mounted for rotation relative to the base;
a carriage assembly mounted to the base for reciprocal movement back and forth past a cutting edge of the knife;
a gauge plate mounted for movement between a closed position that prevents slicing and multiple open positions that permit slicing at respective thicknesses;
a gauge plate adjustment system including a knob with an associated cam, a follower that is engaged with the cam and moved by rotation of the knob and cam, wherein the follower is linked for moving the gauge plate, wherein the follower rides on a slide rail, wherein the slide rail comprises a plate member.

2. The food product slicer of claim 1, wherein an engagement of the follower with the slide rail is configured to allow sliding movement of the follower along the slide rail while preventing rotation of the follower about an axis of the slide rail.

3. The food product slicer of claim 1, wherein the plate member includes a first major surface, a second major surface, a first minor edge running between the first major surface and the second major surface and axially along the plate member, a second minor edge running between the first major surface and the second major surface and axially along the plate member, wherein the follower is configured with a portion that wraps from the first major surface, around the first minor edge and over the second major surface.

4. The food product slicer of claim 3, wherein the follower is configured with a portion that wraps from the first major surface, around the second minor edge and over the second major surface.

5. The food product slicer of claim 1, wherein the plate member comprises a plastic material.

6. The food product slicer of claim 5, wherein the plastic material is an ultra high molecular weight plastic.

7. The food product slicer of claim 1, wherein the plate member includes an outer surface profile, in axial end view, and the follower includes an attachment part that includes an internal surface profile, in axial end view, wherein at least part of the internal surface profile matches at least part of the external surface profile.

8. The product slicer of claim 1, wherein the plate member includes a sensing assembly position thereon for sensing movement and/or position of the follower.

9. The food product slicer of claim 8, wherein the sensing assembly comprises an inductive sensing assembly with a lay flat electromagnetic field generator.

10. The food product slicer of claim 9, wherein the plate member includes a recess into which the lay flat electromagnetic field generator is seated.

11. The food product slicer of claim 10, wherein the inductive sensing assembly further comprises a printed circuit board, wherein the lay flat electromagnetic field generator comprises multiple conductors located on a sensing section of the printed circuit board, wherein the printed circuit board also includes one or more integrated detection components and an electrical connector.

12. The food product slicer of claim 9, wherein the follower includes a projection that projects toward the lay flat electromagnetic field generator, wherein the projection is of an electromagnetic material that disrupts different portions of the electromagnetic field produced by the lay flat electromagnetic field generator based upon different relative positioning of the projection along the lay flat magnetic field generator.

13. A food product slicer, comprising:
a base;
a knife mounted for rotation relative to the base;
a carriage assembly mounted to the base for reciprocal movement back and forth past a cutting edge of the knife;
a gauge plate mounted for movement between a closed position that prevents slicing and multiple open positions that permit slicing at respective thicknesses;
a gauge plate adjustment system including a follower that is linked for moving the gauge plate, wherein the follower rides on a slide rail, wherein the slide rail comprises a plastic member, wherein an engagement of the follower with the slide rail is configured to allow sliding movement of the follower along the slide rail while preventing rotation of the follower about an axis of the slide rail.

14. The product slicer of claim 13, wherein the slide rail includes a sensing assembly position thereon for sensing movement and/or position of the follower.

15. The food product slicer of claim 14, wherein the sensing assembly comprises an inductive sensing assembly with a lay flat electromagnetic field generator, and optionally wherein the slide rail includes a recess into which the lay flat electromagnetic field generator is seated.
